Europäisches Patentamt

European Patent Office

Office européen des brevets

(11) Numéro de publication: **0 530 068 B1**

(12) **FASCICULE DE BREVET EUROPEEN**

(45) Date de publication du fascicule du brevet: **25.10.95**  (51) Int. Cl.6: **C10G 49/24**, B01J 37/20

(21) Numéro de dépôt: **92402210.6**

(22) Date de dépôt: **31.07.92**

(54) **Procédé de démarrage d'une conversion d'hydrocarbures.**

(30) Priorité: **22.08.91 FR 9110592**

(43) Date de publication de la demande:
**03.03.93 Bulletin 93/09**

(45) Mention de la délivrance du brevet:
**25.10.95 Bulletin 95/43**

(84) Etats contractants désignés:
**BE DE GB IT LU NL**

(56) Documents cités:
EP-A- 0 335 754    EP-A- 0 409 680
EP-A- 0 448 435    US-A- 4 177 136
US-A- 4 530 917    US-A- 4 719 195

(73) Titulaire: **EUROPEENNE DE RETRAITEMENT
DE CATALYSEURS (en abrégé EURECAT)
Ouai Jean Jaurès - Boite Postale 45
F-07800 LA VOULTE SUR RHONE (FR)**

(72) Inventeur: **Dufresne, Pierre
26, rue Florian
F-26000 Valence (FR)**
Inventeur: **Rabehasaina, Hans
32 Lot les Bartavelles
F-26270 Loriol sur Drome (FR)**
Inventeur: **Berrebi, Georges
17, rue Barnave
F-26500 Bourg les Valences (FR)**

(74) Mandataire: **Andreeff, François
INSTITUT FRANCAIS DU PETROLE
4, avenue de Bois-Préau
F-92502 Rueil-Malmaison (FR)**

Rank Xerox (UK) Business Services
(3. 10/3.09/3.3.3)

## Description

La demanderesse a décrit dans des brevets (par exemple US-A-4719195) une technique de présulfuration de catalyseurs utilisés en raffinage et en pétrochimie. Du soufre est incorporé dans la masse catalytique et ensuite notamment au moment du démarrage des réactions de raffinage ou de pétrochimie, en présence d'hydrogène, les oxydes des métaux actifs présents dans le catalyseur sont transformés en sulfures.

Dans les méthodes d'incorporation de soufre dans ou sur la masse catalytique, on incorpore un composé sulfuré choisi parmi tous les composés sulfurés adéquats, notamment les polysulfures organiques décrits dans US-A-4530917 de la demanderesse de formule :

$$R - S_{(n)} - R'$$

où n est un nombre entier de 3 à 20 et où les radicaux R et R', identiques ou différents représentent chacun un radical organique renfermant chacun 1 à 150 atomes de carbone par molécule, ces radicaux étant choisis dans le groupe constitué par les radicaux alkyles, saturés ou insaturés, linéaires ou ramifiés ou de type naphténique, les radicaux aryles, les radicaux alkylaryles et les radicaux arylalkyles, R' pouvant aussi représenter l'atome d'hydrogène (à titre d'exemple de polysulfure on peut citer le ditertiododécylpolysulfure (n = 5) et le ditertiononylpolysulfure (n = 5).

On peut également utiliser le disulfure d'ammonium et/ou du soufre en poudre, (fleur de soufre) ce dernier étant alors utilisé en suspension seul ou en mélange avec un autre composé sulfuré (par exemple un polysulfure organique tel que défini ci-dessus) comme décrit dans EP-B-448.435.

Dans les méthodes de démarrage des réactions de pétrochimie ou de raffinage effectués en présence de catalyseurs qui préalablement ont été mis en contact avec un composé soufré, on observe des phénomènes d'exothermicité à des températures souvent voisines de 150 °C. Ces phénomènes exothermiques sont dus à la transformation des oxydes en sulfures, ou éventuellement des oxysulfures en sulfures, qui se produit au moment du démarrage de la réaction lorsqu'on introduit de l'hydrogène sur la masse catalytique.

Ces phénomènes exothermiques ne sont pas contraignants pour des unités petites, surtout lorsqu'au démarrage la charge est liquide car les calories s'évacuent facilement lorsque la charge passe à l'état gazeux. Les phénomènes exothermiques ne sont pas problématiques non plus si une réaction de raffinage peut se faire en plusieurs lits de taille modeste à la place d'un lit unique de gros volume. Mais, de plus en plus on utilise dans des unités plus importantes (unités de traitements de résidus notamment) des réacteurs pouvant contenir plus de 200 tonnes de catalyseurs.

Généralement, jusqu'à présent, après avoir incorporé une quantité suffisante de soufre dans la masse catalytique c'est-à-dire une quantité capable de conduire en la transformation stoechiométrique des oxydes de métaux actifs en sulfures, on procède comme suit à la mise en oeuvre du catalyseur avant réduction à l'hydrogène du dit catalyseur : on charge le catalyseur dans un réacteur, on purge plusieurs fois sous azote, et lorsqu'il n'y a plus de traces d'oxygène dans l'enceinte, on passe en atmosphère d'hydrogène et on allume les fours de chauffage ; on chauffe ainsi jusqu'à 150 °C.

On peut alors procéder à la sulfuration réelle du catalyseur par introduction d'hydrogène. Cette réaction, exothermique, peut s'écrire de la manière suivante, en symbolisant par S l'agent sulfurant quel qu'il soit, soufre élémentaire, polysulfure organique, thiol, etc...

$$MoO_3 + 2S + 3 H_2 \text{--------}> MoS_2 + 3 H_2O$$

Cette réaction peut donner lieu à d'importantes augmentations de température dans le lit catalytique, susceptibles de détériorer parfois le catalyseur ou les équipements

Lorsqu'on ne peut maîtriser une situation exothermique, on doit arrêter d'urgence l'unité (emergency breakdown) et il faut ouvrir toutes les vannes en vue d'emporter tous les effluents à la torche, avec décompression engendrant du froid, donc le retour aux conditions atmosphériques normales.

Le procédé selon l'invention permet de remédier complètement à ces inconvénients. Il consiste à traiter le catalyseur, par un gaz renfermant un mélange d'azote et d'hydrogène (ou d'un mélange gaz inerte-hydrogène) afin de contrôler la cinétique de la réaction écrite ci-dessus. Ce procédé permet de contrôler la réaction de conversion des oxydes en sulfures et se traduit par une forte diminution de l'exothermicité.

Plus précisément l'invention consiste en ce que après avoir procédé à l'incorporation ou à l'imprégnation de composé soufré dans la masse catalytique selon une des méthodes décrites dans les précédents brevets de la demanderesse, (a) on purge l'enceinte dans laquelle se trouve le catalyseur par balayage avec un gaz inerte (de préférence l'azote) en vue d'éliminer l'oxygène moléculaire résiduel, cette purge étant effectuée à une température de l'ordre de 0 à 50°C, de préférence au voisinage de la température ordinaire ; puis (b) on porte l'enceinte sous pression, par exemple entre 100 et 7000 kPa (10 et 70 bars), sous atmosphère d'un gaz inerte (azote de préférence) dont le débit varie à ce stade à titre d'exemple entre environ 50 et 1000 litres par litre de catalyseur et par heure, de préférence entre 100 et 800 litres/heure, puis (c) on élève progressivement en continu, périodiquement ou en semi continu (par paliers par exemple) la température de l'enceinte de 10 à 90°C par heure, de préférence de 20 à 80°C, tout en maintenant le débit de gaz inerte, jusqu'à ce que la température de l'enceinte (température de stabilisation) soit de l'ordre de 140 à 200°C de préférence 150 à 190°C.

On opère 1000 litres par litre de catalyseur et par heure ici toujours avec un débit de gaz inerte de l'ordre de 50 à 1000 litres/heure par exemple, de préférence entre 100 et 800 litres/heure. Ensuite, dans une étape (d), tout en conservant sensiblement la même pression et le même débit de gaz qu'à l'étape (c), on introduit dans l'enceinte (donc sur la masse catalytique) non plus un gaz inerte mais un mélange de gaz inerte et d'hydrogène, le pourcentage d'hydrogène dans le gaz inerte étant compris entre 1 et 15 %, de préférence entre 2 et 10% et plus particulièrement entre 3 et 8% en volume. Le débit du mélange est maintenu généralement jusqu'à ce que la transformation des oxydes en sulfures soit sensiblement complète, l'augmentation de température au début de l'étape (d) ou durant l'étape (d) ne devenant pas supérieure de plus de 30°C voire de plus de 20 °C par rapport à celle de l'étape (c) pour ensuite éventuellement reprendre une valeur sensiblement voisine de celle utilisée à l'étape (c). Ce traitement dans l'enceinte renfermant la masse catalytique est réalisé in-situ ou ex-situ. S'il est réalisé in-situ, l'enceinte étant ici alors le réacteur proprement dit de l'opération de raffinage ou de pétrochimie, on pourra procéder à la fin du traitement selon l'invention, à l'introduction d'hydrogène sensiblement pur, dans une étape (e), en remplacement du mélange gaz inerte-hydrogène et l'on portera sensiblement simultanément la température du réacteur ou de l'enceinte à une température convenable pour achever l'étape de sulfuration proprement dite, par exemple de 280 à 400°C, plus particulièrement de 300 à 380 °C. Si le traitement est réalisé ex-situ, le catalyseur est alors stocké puis envoyé sur le site.

Il peut être avantageux toutefois, de continuer à le traiter, dans une étape (e), dans la dite enceinte par de l'hydrogène sensiblement pur après avoir porté sensiblement et simultanément la température de l'enceinte à une température comprise entre 280 et 400°C, à titre d'exemple. Dans les deux cas, que le catalyseur soit traité in-situ ou ex-situ, on peut noter une exothermicité qui se produit lorsqu'on introduit le mélange gaz inertehydrogène sur le catalyseur à la place du gaz inerte seul. Mais cette exothermicité est faible par rapport à celle qui se serait produite si la masse catalytique avait été traitée directement par de l'hydrogène non dilué. On verra dans les exemples que dans l'étape (c) au bout de quelques heures d'introduction du mélange gaz inerte-hydrogène, la température qui ne s'était emballée que d'environ 30°C, voire de 20°C, retombe rapidement à la température de l'étape (c).

L'augmentation de température peut même être inférieure à 10°C si au lieu d'opérer complètement en phase gazeuse, on opère partiellement en phase liquide et de la façon suivante qui consiste à l'issue de l'étape (c) à faire précéder l'étape (d), par un traitement de la masse catalytique par un gazole liquide de distillation atmosphérique ou une charge liquide hydrocarbonée équivalente, avec un débit d'environ 0.5 à 2 litres/heure pendant environ 1 à 6 heures avant de procéder à l'étape (d).

La réaction de sulfuration des oxydes métalliques de type molybène ou tungstène et cobalt ou nickel est contrôlée par l'addition progressive d'hydrogène.

Par le débit d'hydrogène, on surveille les delta T, c'est-à-dire l'augmentation de température due à la réaction exothermique. Et l'on introduit ainsi l'hydrogène en mélange avec le gaz inerte, en continu, en semi continu ou périodiquement avec la vitesse voulue pour ne pas dépasser une valeur limite fatale à la bonne marche de l'opération. Le débit d'hydrogène se contrôle par un compresseur adéquat.

**Exemple 1** :

On utilise un catalyseur d'hydrodésulfuration contenant 3 % d'oxyde de cobalt CoO et 14 % d'oxyde de molybdène $MoO_3$, le reste étant constitué d'alumine. Ce catalyseur, de surface spécifique 220 $m^2$/g est présulfuré selon la technique suivante : on prépare une solution constituée de 45 % de TPS 37, polysulfure organique contenant 37 % poids de soufre, vendu par la Société Nationale Elf Aquitaine, et de 55 % d'un solvant de type white spirit, essence lourde de points d'ébullition initial et final 150 et 250°C. Le catalyseur est ensuite imprégné avec la solution ainsi préparée selon la technique d'imprégnation à sec, soit 45 ml de solution pour 100 g de catalyseur. Le solide imprégné est ensuite soumis à un traitement à 140°C, sous une pression de 10 torrs (1333 Pa) pendant 2 heures dans le but d'évaporer l'essentiel du solvant. Le catalyseur qui était de couleur bleu, a pris une teinte gris foncé à noir après ce traitement. Sa teneur en

3

soufre est de 6,7 % poids et sa teneur en carbone de 4,9 % poids.

Ce catalyseur est testé dans un réacteur afin d'évaluer les effets thermiques lors des procédures de chauffage sous hydrogène. Le catalyseur (1,9 litres) est disposé dans le réacteur. Celui-ci est muni d'un puits thermométrique contenant trois thermocouples disposés à l'entrée, au centre et à la sortie du lit catalytique. La régulation de température s'effectuant grâce à des thermocouples disposés à l'extérieur du réacteur contre les parois de celui-ci, les trois thermocouples centraux étant utilisés pour l'enregistrement de la température.

Cette technique d'incorporation de soufre dans le catalyseur sera la même pour les exemples 2 et 3 qui suivent dans la présente demande de brevet. Ici dans ce premier exemple, on décrit une procédure d'activation du catalyseur qui n'est pas conforme à l'invention. Elle consiste à fermer le réacteur de façon étanche, purger le système sous azote, introduire l'hydrogène, puis pressuriser le système à 5000 kPa (50 bars) d'hydrogène sous un débit de 600 litres d'hydrogène TPN par heure. Le réacteur est ensuite soumis à un chauffage régulier avec montée en température au rythme de 30°C/heure, grâce à des coquilles chauffées électriquement. A environ 160°C, apparaît un assez brusque décrochement du signal de température par rapport à la droite régulière de montée en température, signe de l'existence d'un phénomène exothermique à l'intérieur du réacteur. Celui-ci est dû à la réaction de formation des sulfures de cobalt et molybdène à partir des oxysulfures présents initialement en présence d'hydrogène. On caractérisera ce phénomène par l'ampleur de l'écart de température delta T par rapport à la courbe linéaire de 30°C/heure et ce, en calculant la moyenne sur les trois signaux de température. Dans cet exemple, la valeur du delta T est égale à 100°C.

Dans une petite unité, ce décrochement est maîtrisable et l'on peut poursuivre la réduction à l'hydrogène du catalyseur en vue de procédé ensuite au démarrage de l'opération de raffinage ou pétrochimie. Si l'unité est grande, le décrochement peut ne pas être maîtrisable et contraindre à un arrêt d'unité.

Exemple 2 :

Cet exemple, conforme à l'invention, reprend le même catalyseur présulfuré que celui de l'exemple précédent et le même équipement de test. En revanche, la procédure d'activation est différente. Après la purge sous azote, étape (a), le réacteur est gonflé sous azote à une pression de 5000 kPa (50 bars), le débit étant ajusté à 800 litres/heure, étape (b). La température est ensuite portée à 180°C à raison de 60°C/heure, puis stabilisée à ce niveau, étape (c). L'azote est ensuite remplacée par un mélange azote/hydrogène à 5 % d'hydrogène, en conservant un débit total de 600 litres/heure, étape (d).

Les indicateurs de température décrochent rapidement, et l'écart maximum moyen de température delta T est de 15°C, la température étant de nouveau stabilisée après 4 heures d'injection de ce mélange. Celui-ci est alors remplacé, étape (e) par de l'hydrogène sensiblement pur. Aucun changement de signal des thermocouples n'est enregistré. La température est ensuite portée jusqu'à 320°C à raison de 30°C/h sans qu'aucune exothermie ne soit notée. La réaction de sulfuration s'est effectuée dans des conditions plus douces que dans l'exemple 1, car l'exotherme a été maitrisée par l'ajout progressif d'hydrogène.

Exemple 3 :

Cet exemple constitue une variante de l'exemple 2, où le protocole opératoire est identique jusqu'au moment où la température est augmentée (pression de 5000 kPa (50 bars) d'azote, débit de 600 l/heure. La température est portée à 180°C à raison de 60°C/heure puis stabilisée à ce niveau. On injecte ensuite à un débit de 0,95 litre/heure un gazole de distillation atmosphérique, de teneur en soufre 0,82 % poids, de points initial et final de distillation 230 et 378°C et de densité 0,830. Après 3 heures d'injection, l'azote est remplacé par un mélange d'hydrogène/azote contenant 10 % d'hydrogène en conservant un débit total de 600 litres/heure.

Les signaux des thermocouples montrent seulement une légère augmentation de température (delta T) sur une période de 2 heures environ et d'une amplitude de 5°C.

Exemple 4 (comparatif) :

De manière non conforme à l'invention, on décrit une activation à l'hydrogène pur engendrant une forte exothermie. Le catalyseur utilisé est le même que celui de l'exemple 1, à base d'oxydes de cobalt et de molybdène, mais contrairement à cet exemple, il est prétraité de la façon suivante. On mélange 98 g de soufre élémentaire en poudre à 850 ml de solvant de type white spirit. La suspension est agitée fortement et ajoutée sur 1,9 litre du catalyseur dans un bol rotatif. L'opération d'imprégnation s'effectue en 10 minutes et la suspension est agitée intermédiairement. Le solide imprégné est ensuite soumis à un traitement thermique à 140°C, sous une pression de 10 torrs dans le but d'évaporer le solvant. Le catalyseur est devenu de teinte grise. Sur trois échantillons prélevés dans ce lot de catalyseur les teneurs en soufre sont de 6,9, 6,7 et 6,7 % poids et les teneurs en carbone de 0,10, 0,13 et 0,11 %.

Le solide est ensuite chargé dans un équipement de test catalytique analogue à celui de l'exemple 1. Le réacteur est fermé, purgé sous azote puis balayé à l'hydrogène. Ensuite l'installation est pressurisée à 5000 kPa (50 bars) d'hydrogène sous un débit de 600 litres/heure d'hydrogène TPN. Le réacteur est ensuite soumis à un chauffage régulier au rythme de 30°C/heure. A environ 145°C, la courbe de température décroche et une brusque augmentation de température est enregistrée. Le delta T moyen est de 180°C.

Exemple 5 (comparatif) :

On reprend l'exemple 4 mais en effectuant pendant la phase de réactivation, le traitement du catalyseur par un gazole liquide de distillation atmosphérique, de teneur en soufre 0,82 % poids, ainsi qu'expliqué à l'exemple 3. Le delta T qui était de 180°C à l'exemple 4, s'abaisse à 90°C.

Exemple 6 :

On répète l'exemple 2, mais en imprégnant initialement le catalyseur par du soufre en fleur au lieu de TPS. Le delta T est 20°C. Le delta T n'est pas aussi faible qu'à l'exemple 2 mais la méthode permet d'obtenir une exothermicité acceptable tout en utilisant un agent soufré plus facilement disponible que le TPS 37.

Exemple 7 :

On répète l'exemple 2, mais en imprégnant initialement le catalyseur par un mélange 50/50 poids de soufre en fleur et de TPS. Le delta T est de 15°C.

## TABLEAU RECAPITULATIF DES EXEMPLES

| EXEMPLE | Non conforme à l'invention | Conforme à l'invention | Agent sulfurant | Phase | Contrôle débit hydrogène | Delta T |
|---------|---------|---------|---------|-------|---------|-------|
| 1 | X | | TPS 37 | Gaz | non | 100 |
| 2 | | X | TPS 37 | Gaz | oui | 15 |
| 3 | | X | TPS 37 | Liq. | oui | <5 |
| 4 | X | | S | Gaz | non | 180 |
| 5 | X | | S | Liq | non | 90 |
| 6 | | X | S | Gaz | oui | 20 |
| 7 | | X | 50 % S 50 % TPS | Gaz | oui | 15 |

5

**Revendications**

1. Procédé de démarrage d'une réaction catalytique de conversion d'hydrocarbures ou de mise en oeuvre d'un catalyseur de conversion d'hydrocarbures consistant à imprégner ou à incorporer dans un catalyseur au moins un agent soufré choisi dans le groupe constitué par le soufre et les composés soufrés caractérisé ensuite en ce que, ex-situ, ou in-situ,

    a) on purge entre environ 0 et 50°C l'enceinte dans laquelle se trouve le catalyseur par balayage avec un gaz inerte en vue d'éliminer de l'enceinte toute trace d'oxygène moléculaire,

    b) on porte l'enceinte sous pression sous atmosphère d'un gaz inerte, dont le débit est compris entre environ 50 et 1000 litres par litre de catalyseur et par heure.

    c) on élève progressivement la température de l'enceinte de 10 à 90°C par heure tout en maintenant le débit de gaz inerte jusqu'à ce que la température de l'enceinte (température de stabilisation) soit de l'ordre de 140 à 200°C,

    (d) en conservant sensiblement la même pression dans l'enceinte et le même débit de gaz qu'à l'étape (c), on introduit dans l'enceinte non plus un gaz inerte mais un mélange de gaz inerte et d'hydrogène, le pourcentage d'hydrogène dans le gaz inerte étant compris entre 1 et 15 % en volume, le débit du mélange étant maintenu jusqu'à transformation sensiblement complète des oxydes en sulfures, l'augmentation de température ne devenant pas supérieure de plus de 30°C par rapport à celle de l'étape (c).

    (e) on traite alors le catalyseur par de l'hydrogène sensiblement pur entre 280 et 400°C.

2. Procédé selon la revendication 1 dans lequel l'agent soufré est le soufre élémentaire.

3. Procédé selon la revendication 1 dans lequel l'agent soufré est un polysulfure organique.

4. Procédé selon l'une des revendications 1 à 3 dans lequel l'agent soufré est un mélange de soufre élémentaire et d'au moins un polysulfure organique.

5. Procédé selon l'une des revendications 1 à 4 dans lequel ledit gaz inerte est l'azote.

6. Procédé selon l'une des revendications 1 à 5 dans lequel l'étape (a) est effectuée entre 0 et 50°C, l'étape (b) est réalisée avec un débit de gaz inerte compris entre 50 et 1000 litres/heure jusqu'à atteindre une pression comprise entre 1000 et 7000 kPa (10 et 70 bars).

7. Procédé selon l'une des revendications 1 à 6 dans lequel le traitement du catalyseur est effectué ex-situ.

8. Procédé selon la revendication 7 dans lequel à l'issue de l'étape (c), on fait précéder l'étape (d) par un traitement du catalyseur par un liquide à base de gazole de distillation atmosphérique ou une charge hydrocarbonée équivalente avec un débit d'environ 0,5 à 2 litres/heure pendant environ 1 à 6 heures.

**Claims**

1. Process for starting a catalytic hydrocarbon conversion reaction or using a hydrocarbon conversion catalyst consisting of impregnating or incorporating into a catalyst at least one sulphur agent chosen from within the group consisted by sulphur and sulphur compounds, characterized in that ex situ or in situ,

    a) the enclosure containing the catalyst is purged by scavenging with an inert gas with a view to eliminating from the enclosure any traces of molecular oxygen,

    b) the enclosure under pressure is brought under the atmosphere of an inert gas,

    c) the temperature of the enclosure is progressively raised by 10 to 90°C per hour, whilst maintaining the inert gas flow rate until the enclosure temperature (stabilization) is approximately 140 to 200°C,

    d) whilst substantially maintaining the same pressure in the enclosure and the same gas flow rate as in stage (c), a mixture of an inert gas and hydrogen and not inert gas alone is introduced into the enclosure, the hydrogen percentage in the inert gas being between 1 and 15% by volume, the flow rate of the mixture being maintained up to the substantially complete conversion of oxides into sulphides, the temperature rise not exceeding by more than 30°C that of stage (c).

(e) the catalyst is then treated with substantially pure hydrogen between 280 and 400°C.

2. Process according to claim 1, wherein the sulphur agent is elementary sulphur.

3. Process according to claim 1, wherein the sulphur agent is an organic polysulphide.

4. Process according to any one of the claims 1 to 3, wherein the sulphur agent is a mixture of elementary sulphur and at least one organic polysulphide.

5. Process according to any one of the claims 1 to 4, wherein the inert gas is nitrogen.

6. Process according to any one of the claims 1 to 5, wherein stage (a) is performed at between 0 and 50°C, stage (b) is performed with an inert gas flow rate between 50 and 1000 litres/hour until a pressure between 10 and 7000 kPa (10 and 70 bars) is obtained.

7. Process according to any one of the claims 1 to 6, wherein the treatment of the catalyst is performed ex situ.

8. Process according to claim 7, wherein stage (d) is preceded by a treatment of the catalyst with a liquid based on atmospheric distillation gas oil or an equivalent hydrocarbon charge with a flow rate of approximately 0.5 to 2 litres/hour for approximately 1 to 6 hours.

**Patentansprüche**

1. Verfahren zum Starten einer katalytischen Reaktion zur Umwandlung von Kohlenwasserstoffen oder zur Anwendung eines Katalysators zur Umwandlung von Kohlenwasserstoffen, welches darin besteht, in einen Katalysator wenigstens ein Schwefelmittel, das aus der Gruppe ausgewählt ist, welche durch Schwefel und Schwefelverbindungen gebildet ist, zu imprägnieren oder einzufügen, dann dadurch gekennzeichnet, daß ex-situ oder in-situ

(a) man den Raum, in welchem sich der Katalysator befindet, zwischen etwa 0 und 50°C durch Spülung mit einem Inertgas reinigt, um aus dem Raum jegliche Spur von molekularem Sauerstoff zu entfernen,

(b) man den Raum unter Druck unter Atmosphäre von einem Inertgas bringt, dessen Menge einschließlich zwischen etwa 50 und 1000 Liter pro Liter Katalysator und pro Stunde beträgt,

(c) man schrittweise die Temperatur des Raumes von 10 bis 90°C pro Stunde alles unter Beibehaltung der Menge von Inertgas erhöht, bis die Temperatur des Raumes (Temperatur zur Stabilisierung) in der Größenordnung von 140 bis 200°C liegt,

(d) man führt unter Beibehaltung im wesentlichen des gleichen Druckes in dem Raum und der gleichen Menge von Gas wie bei dem Schritt (c) in den Raum nicht mehr ein Inertgas, sondern eine Mischung aus Inertgas und Wasserstoff ein, wobei der Prozentsatz von Wasserstoff in dem Inertgas einschließlich zwischen 1 und 15 Vol.-% beträgt, wobei die Menge der Mischung bis zu einer im wesentlichen vollständigen Oberführung von Oxyden in Schwefelverbindungen aufrechtgehalten wird, wobei die Erhöhung der Temperatur nicht größer als 30°C in bezug auf diejenige des Schrittes (c) wird,

(e) man den Katalysator dann durch den im wesentlichen reinen Wasserstoff zwischen 280 und 400°C behandelt,

2. Verfahren nach Anspruch 1, bei welchem das Schwefelmittel elementarer Schwefel ist.

3. Verfahren nach Anspruch 1, bei welchem das Schwefelmitttel ein organisches Polysulfid ist.

4. Verfahren nach einem der Ansprüche 1 bis 3, bei welchem das Schwefelmittel eine Mischung aus elementarem Schwefel und wenigstens einem organischen Polysulfid ist.

5. Verfahren nach einem der Ansprüche 1 bis 4, bei welchem das Inertgas Stickstoff ist.

6. Verfahren nach einem der Ansprüche 1 bis 5, bei welchem der Schritt (a) zwischen 0 und 50°C durchgeführt wird, der Schritt (b) mit einer Menge von Inertgas einschließlich zwischen 50 und 1000 Liter/Stunde bis zum Erreichen eines Druckes einschließlich zwischen 1000 und 7000 kPa (10 und 70 bar) realisiert wird.

7.  Verfahren nach einem der Ansprüche 1 bis 6, bei welchem die Behandlung des Katalysators ex-situ durchgeführt wird.

8.  Verfahren nach Anspruch 7, bei welchem man am Ausgang des Schrittes (c) mit dem Schritt (d) durch eine Behandlung des Katalysators durch eine Flüssigkeit auf Basis von Gasöl zur atmosphärischen Destillation oder eine kohlenwasserstoffhaltige, mit einer Menge von ungefähr 0,5 bis 2 Liter/Stunde äquivalente Charge während etwa 1 bis 6 Stunden durchführt.